# EUROPEAN PATENT APPLICATION

(11) **EP 4 542 806 A1**
(43) Date of publication of application: **23.04.2025**
(21) Application number: 23822962.9
(22) Date of filing: 05.06.2023
(51) Int. Cl.: H02J 1/14, H02J 1/10, H02J 7/00, H02J 7/34

(54) **CONTROL METHOD AND APPARATUS FOR PARALLEL ENERGY STORAGE UNITS IN DIRECT-CURRENT MICROGRID**

(30) Priority: 14.06.2022 CN 202210674990
(71) Applicant: Wanbang Digital Energy Co., Ltd., Changzhou, Jiangsu 213100 (CN)
(72) Inventor: CHEN, Shen, Changzhou, Jiangsu 213100 (CN); QI, Bin, Changzhou, Jiangsu 213100 (CN); SHEN, Danli, Changzhou, Jiangsu 213100 (CN); ZHENG, Guiyang, Changzhou, Jiangsu 213100 (CN); ZHU, Xuancai, Changzhou, Jiangsu 213100 (CN)
(74) Representative: Kurig, Thomas
(86) International application number: PCT/CN2023/098382
(87) International publication number: WO 2023/241393

(57) **Abstract**

Provided in the present invention are a control method and apparatus for parallel energy storage units in a direct-current microgrid. The direct-current microgrid comprises a microgrid inverter, and a plurality of energy storage units, which are connected in parallel at a direct-current side of the microgrid inverter. The control method comprises the following steps: acquiring a droop curve used by a direct-current microgrid to perform droop control; acquiring an energy storage connection port voltage of a microgrid inverter; acquiring an energy storage input port voltage collected in each energy storage unit; calculating a droop curve offset of each energy storage unit according to the energy storage input port voltage collected in each energy storage unit and the energy storage connection port voltage of the microgrid inverter; and according to the droop curve offset of each energy storage unit, adjusting the droop curve used by the direct-current microgrid to perform droop control, so as to obtain a droop curve corresponding to each energy storage unit, and thereby respectively controlling each energy storage unit according to the droop curve corresponding to each energy storage unit.

## Description

### Technical Field

The present disclosure relates to the field of direct-current microgrid control technology, specifically to a control method for parallel energy storage units in a direct-current microgrid and a control apparatus for parallel energy storage units in a direct-current microgrid.

### Description of Related Art

In direct-current microgrids, droop control is simple and easy to implement, and is widely used. Conventional droop control adopts fixed droop coefficients and fixed reference voltages. Due to the general differences in output line impedance of various topologies, this leads to conventional droop control being unable to ensure output current sharing while guaranteeing bus voltage control accuracy. Chinese patent literature CN202011491369.9 and CN201910554404.8 both disclose improved droop control strategies, but the schemes of the above two patent literature belong to distributed control, which essentially designs a set of adaptive droop control algorithms at each terminal to suppress current imbalance caused by differences in output line impedance and other factors. These schemes are no longer applicable to centralized control application scenarios. For example, in household energy storage systems, centralized control of multiple batteries is required when multiple batteries are connected in parallel. Due to factors such as voltage sampling differences within each battery, power imbalance might occur among batteries. Taking a parallel system of two batteries as an example, assuming that the voltage error between Battery 1 and Battery 2 is 0.5%, and the maximum power of both is 5000W. The corresponding voltage difference under a 400V DC bus might reach 4V, and at a droop slope of 250W/V, the power offset might reach 1000W. Such a large power offset might affect the stability and reliability of the direct-current microgrid operation.

### SUMMARY

To solve the above technical problems, the present disclosure provides a control method and a control apparatus for parallel energy storage units in a direct-current microgrid, which controls each parallel energy storage unit based on a unified control strategy, and generate differentiated droop curves according to the voltage error collected by each energy storage unit. Compared to independently designing adaptive droop control algorithms for each energy storage unit and controlling through the same droop curve, this approach may not only solve the problem of uneven current flow when multiple energy storage units are connected in parallel, but also greatly reduce the offset of output power between different energy storage units. Therefore, the present disclosure may be applicable to centralized control scenarios of multiple parallel energy storage units, improving the stability and reliability of direct-current microgrid operation.

The technical solution adopted by the present disclosure is as follows:
In a control method for parallel energy storage units in a direct-current microgrid, and the direct-current microgrid includes a microgrid inverter and multiple energy storage units connected in parallel to the direct-current side of the microgrid inverter. The control method includes the following steps: acquiring an energy storage connection port voltage of a microgrid inverter; acquiring an energy storage input port voltage collected in each energy storage unit; calculating a droop curve offset of each energy storage unit according to the energy storage input port voltage collected in each energy storage unit and the energy storage connection port voltage of the microgrid inverter; and according to the droop curve offset of each energy storage unit, adjusting the droop curve used by the direct-current microgrid to perform droop control, so as to obtain a droop curve corresponding to each energy storage unit, and thereby respectively controlling each energy storage unit according to the droop curve corresponding to each energy storage unit.

The droop curve used by the direct-current microgrid to perform droop control includes a charging area, a non-charge and non-discharge area, and a discharging area. In the discharging area, the energy storage input power is less than 0, and the energy storage input port voltage is less than a first voltage. In the non-charge and non-discharge area, the energy storage input power is equal to 0, and the energy storage input port voltage is between the first voltage and a second voltage. In the charging area, the energy storage input power is greater than 0, and the energy storage input port voltage is greater than the second voltage, wherein the first voltage is the rated charge and discharge state switching voltage value of the energy storage unit, and the second voltage is the sum of the rated charge and discharge state switching voltage value of the energy storage unit and a preset voltage width.

The step of calculating the droop curve offset for each energy storage unit based on the energy storage input port voltage collected internally by each energy storage unit and the energy storage connection port voltage of the microgrid inverter specifically includes: calculating the error of the energy storage input port voltage collected internally by each energy storage unit relative to the energy storage connection port voltage of the microgrid inverter; using the rated charge and discharge state switching voltage value of the energy storage unit as a reference to calculate the droop curve offset for each energy storage unit according to the error of the energy storage input port voltage collected internally by each energy storage unit relative to the energy storage connection port voltage of the microgrid inverter.

The step of adjusting the droop curve used by the direct-current microgrid to perform droop control according to the droop curve offset of each energy storage unit specifically includes: translating the droop curve used by the direct-current microgrid to perform droop control along the coordinate axis direction of the energy storage input port voltage according to the droop curve offset of each energy storage unit.

In a control apparatus for parallel energy storage units in a direct-current microgrid, the direct-current microgrid includes a microgrid inverter and multiple energy storage units connected in parallel to the direct-current side of the microgrid inverter. The control apparatus includes: a first acquiring module, the first acquiring module is configured to obtain the droop curve used by the direct-current microgrid to perform droop control; a second acquiring module, the second acquiring module is configured to obtain the energy storage connection port voltage of the microgrid inverter; a third acquiring module, the third acquiring module is configured to obtain the energy storage input port voltage collected internally by each energy storage unit; a calculation module, the calculation module is configured to calculate the droop curve offset for each energy storage unit according to the energy storage input port voltage collected internally by each energy storage unit and the energy storage connection port voltage of the microgrid inverter; a control module, the control module is configured to adjust the droop curve used by the direct-current microgrid to perform droop control according to the droop curve offset of each energy storage unit, so as to obtain the droop curve corresponding to each energy storage unit in order to control each energy storage unit separately according to the droop curve corresponding to each energy storage unit.

The droop curve used by the direct-current microgrid to perform droop control includes a charging area, a non-charge and non-discharge area, and a discharging area. In the discharging area, the energy storage input power is less than 0, and the energy storage input port voltage is less than a first voltage. In the non-charge and non-discharge area, the energy storage input power is equal to 0, and the energy storage input port voltage is between the first voltage and a second voltage. In the charging area, the energy storage input power is greater than 0, and the energy storage input port voltage is greater than the second voltage,

Wherein, the first voltage is the rated charge and discharge state switching voltage value of the energy storage unit, and the second voltage is the sum of the rated charge and discharge state switching voltage value of the energy storage unit and a preset voltage width.

The calculation module is specifically configured to: calculate the error of the energy storage input port voltage collected internally by each energy storage unit relative to the energy storage connection port voltage of the microgrid inverter; use the rated charge and discharge state switching voltage value of the energy storage unit as a reference to calculate the droop curve offset of each energy storage unit according to the error of the energy storage input port voltage collected internally by each energy storage unit relative to the energy storage connection port voltage of the microgrid inverter.

The control module is specifically configured to translate the droop curve used by the direct-current microgrid to perform droop control along the coordinate axis direction of the energy storage input port voltage according to the droop curve offset of each energy storage unit.

The advantageous effects of the present disclosure:

The present disclosure calculates the droop curve offset of each energy storage unit based on the energy storage input port voltage collected internally by each energy storage unit and the energy storage connection port voltage of the microgrid inverter, then adjusts the droop curve used by the direct-current microgrid to perform droop control according to the droop curve offset of each energy storage unit, so as to obtain the droop curve corresponding to each energy storage unit in order to control each energy storage unit separately according to the droop curve corresponding to each energy storage unit. Thereby, a unified control strategy is provided to control respective parallel energy storage units, and differentiated droop curves are generated according to the voltage error collected by each energy storage unit. Compared with independently designing adaptive droop control algorithms for each energy storage unit and controlling through the same droop curve, this present disclosure may not only solve the problem of uneven current flow when multiple energy storage units are connected in parallel, but also greatly reduce the offset of output power of different energy storage units. Thus, the present disclosure may be applicable to centralized control scenarios of multiple parallel energy storage units, improving the stability and reliability of direct-current microgrid operation.

### BRIEF DESCRIPTION OF THE DRAWINGS

FIG. 1 is a structural schematic diagram of a direct-current microgrid according to an embodiment of the present disclosure.
FIG. 2 is a flow chart of a control method for parallel energy storage units in a direct-current microgrid according to an embodiment of the present disclosure.
FIG. 3 is a schematic diagram of a droop curve according to an embodiment of the present disclosure.
FIG. 4 is a schematic diagram of adjusted droop curves corresponding to two energy storage units according to an embodiment of the present disclosure.
FIG. 5 is a schematic diagram of a droop control structure according to an embodiment of the present disclosure.
FIG. 6 is a block diagram of a control apparatus for parallel energy storage units in a direct-current microgrid according to an embodiment of the present disclosure.

### DESCRIPTION OF THE EMBODIMENTS

The following description will clearly and completely describe the technical solutions in the embodiments of the present disclosure in conjunction with the accompanying drawings of the embodiments of the present disclosure. Clearly, the described embodiments are only a part of the embodiments of the present disclosure, not based on the overall embodiments in the present disclosure, all other embodiments obtained by those skilled in the art without creative labor are within the scope of protection of the present disclosure.

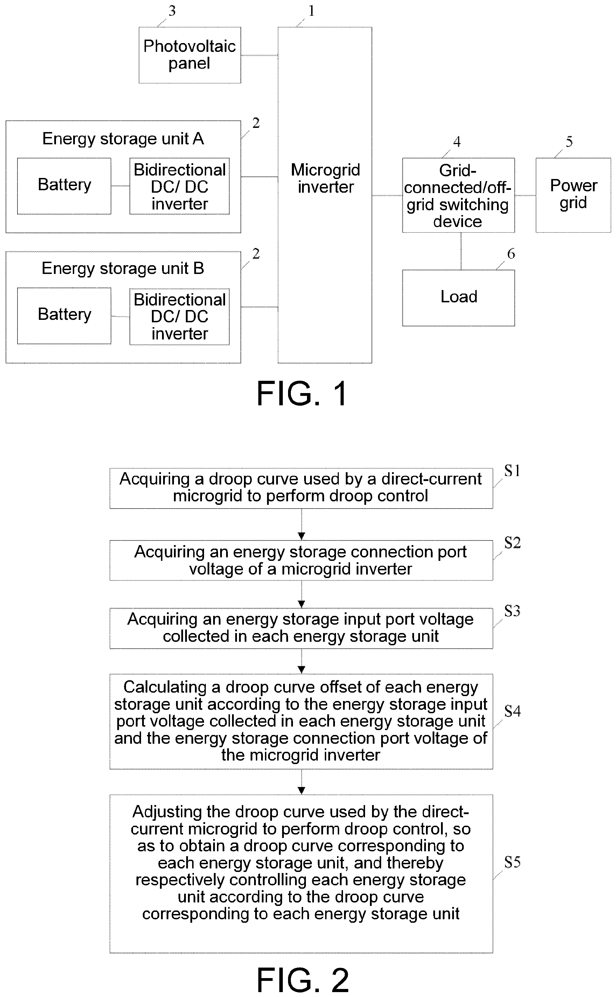

As shown in FIG. 1, in an embodiment of the present disclosure, the direct-current microgrid includes a microgrid inverter 1 and multiple energy storage units 2 (two energy storage units A and B are shown as examples in the figure) connected in parallel on the direct-current side of the microgrid inverter. The input side of the microgrid inverter 1 is also connected to a photovoltaic panel 3, and the output side of the microgrid inverter 1 is connected to a power grid 5 and a load 6 respectively through a grid-connected/off-grid switching device 4. Each energy storage unit includes a battery and a bidirectional DC/DC converter. Through the control of control components such as EMS and the inverter controller inside the microgrid inverter 1, the energy storage units may realize both energy storage and power supply to the power grid and the load.

As shown in FIG. 2, the control method for parallel energy storage units in a direct-current microgrid according to an embodiment of the present disclosure includes the following steps:
S1, Acquiring the droop curve used by the direct-current microgrid to perform droop control.

S2, Acquiring the energy storage connection port voltage of the microgrid inverter.

S3, Acquiring the energy storage input port voltage collected internally by each energy storage unit.

The droop curve used by the direct-current microgrid to perform droop control is a power-voltage curve, which represents the relationship between the energy storage input power and the energy storage input port voltage.

In an embodiment of the present disclosure, the droop curve used by the direct-current microgrid to perform droop control includes a discharging area and a charging area. In the discharging area, the energy storage input power is less than 0 (indicating the case where the battery outputs power) and the energy storage input port voltage is less than the rated charge and discharge state switching voltage value of the energy storage unit; in the charging area, the energy storage output power is greater than 0 (indicating the case where power is input to the battery) and the energy storage input port voltage is greater than the rated charge and discharge state switching voltage value.

It should be noted that in an embodiment of the present disclosure, the energy storage input port voltage is obtained by internal collection of the energy storage unit, while the energy storage connection port voltage at the microgrid inverter refers to the voltage at the port where the microgrid inverter connects to the energy storage unit, which is also the direct-current bus voltage connecting the energy storage unit, and may be collected by the microgrid inverter.

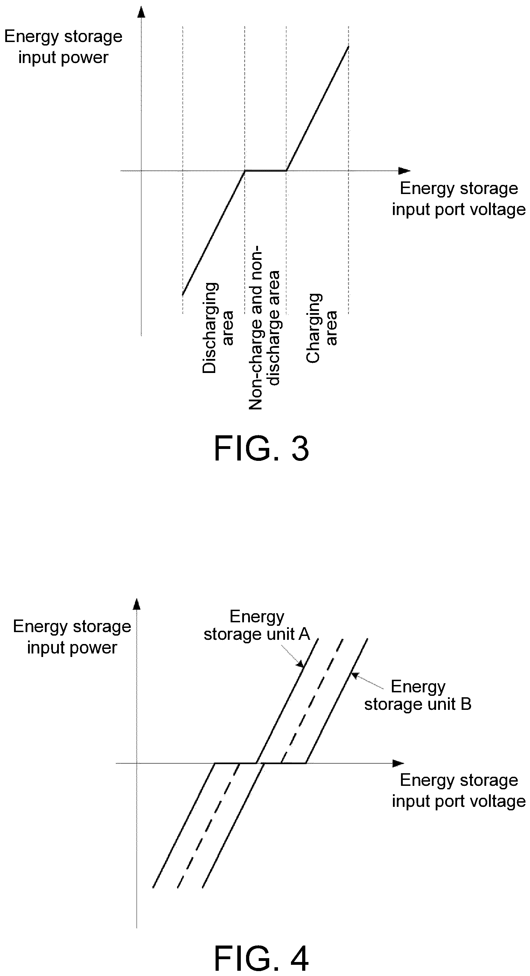

In a preferred embodiment of the present disclosure, a non-charge and non-discharge area may also be added to the droop curve used by the direct-current microgrid to perform droop control, as shown in FIG. 3, the droop curve used by the direct-current microgrid to perform droop control includes a charging area, a non-charge and non-discharge area, and a discharging area. In the discharging area, the energy storage input power is less than 0 and the energy storage input port voltage is less than the first voltage; in the non-charge and non-discharge area, the energy storage input power equals 0 and the energy storage input port voltage is between the first voltage and the second voltage; in the charging area, the energy storage input power is greater than 0 and the energy storage input port voltage is greater than the second voltage, wherein the first voltage is the rated charge and discharge state switching voltage value of the energy storage unit, and the second voltage is the sum of the rated charge and discharge state switching voltage value of the energy storage unit and the preset voltage width. By adding a non-charge and non-discharge area, it is possible to effectively avoid frequent switching of charge and discharge states when near the rated charge and discharge state switching voltage value of the energy storage unit. It should be understood that the preset voltage width may be set according to the rated charge and discharge state switching voltage value of the energy storage unit and the requirements for suppressing charge and discharge state switching. For example, when the rated charge and discharge state switching voltage value of the energy storage unit is 400V, the preset voltage width may be set to 10V, meaning that the discharging area is where the energy storage input port output voltage is less than 400V, the non-charge and non-discharge area is where the energy storage input port output voltage is between 400V and 410V, and the charging area is where the energy storage input port output voltage is greater than 410V.

S4, Calculating the droop curve offset for each energy storage unit based on the energy storage input port voltage collected internally by each energy storage unit and the energy storage connection port voltage at the microgrid inverter.

Specifically, the error of the energy storage input port voltage collected internally by each energy storage unit relative to the energy storage connection port voltage at the microgrid inverter may be calculated first. For example, when the energy storage connection port voltage at the microgrid inverter is 420V, if the energy storage input port voltage collected internally by energy storage unit A is 417.9V, then the error of the energy storage input port voltage collected internally by the energy storage unit A relative to the energy storage connection port voltage at the microgrid inverter is (417.9-420)/420* 100%=-0.5%. If the energy storage input port voltage collected internally by energy storage unit B is 422.1V, then the error of the energy storage input port voltage collected internally by the energy storage unit B relative to the energy storage connection port voltage at the microgrid inverter is (422.1-420)/420* 100%=0.5%.

Then, the rated charge and discharge state switching voltage value of the energy storage unit is used as a reference to calculate the droop curve offset for each energy storage unit based on the error of the energy storage input port voltage collected internally by each energy storage unit relative to the energy storage connection port voltage at the microgrid inverter. Specifically, the droop curve offset for each energy storage unit may be obtained by multiplying the error of the energy storage input port voltage collected internally by each energy storage unit relative to the energy storage connection port voltage at the microgrid inverter by the rated charge and discharge state switching voltage value of the energy storage unit. Still, the aforementioned energy storage units A and B are used as examples, the droop curve offset for the energy storage unit A is -0.5%*400V=-2V, and the droop curve offset for the energy storage unit B is 0.5%*400V=2V.

S5, Adjusting the droop curve used for the direct-current microgrid to perform droop control according to the droop curve offset of each energy storage unit to obtain the droop curve corresponding to each energy storage unit in order to control each energy storage unit separately based on the droop curve corresponding to each energy storage unit.

Specifically, the droop curve used for the direct-current microgrid to perform droop control may be translated along the coordinate axis direction of the energy storage input port voltage according to the droop curve offset of each energy storage unit. If the droop curve offset is negative, the droop curve offset is translated in the negative direction of the coordinate axis of the energy storage input port voltage; if the droop curve offset is positive, the droop curve offset is translated in the positive direction of the coordinate axis of the energy storage input port voltage. Still, the aforementioned energy storage units A and B are used as examples, as shown in FIG. 4, the droop curve used for the direct-current microgrid to perform droop control is translated 2V to the left to obtain the droop curve corresponding to the energy storage unit A, and the droop curve used for the direct-current microgrid to perform droop control is translated 2V to the right to obtain the droop curve corresponding to the energy storage unit B.

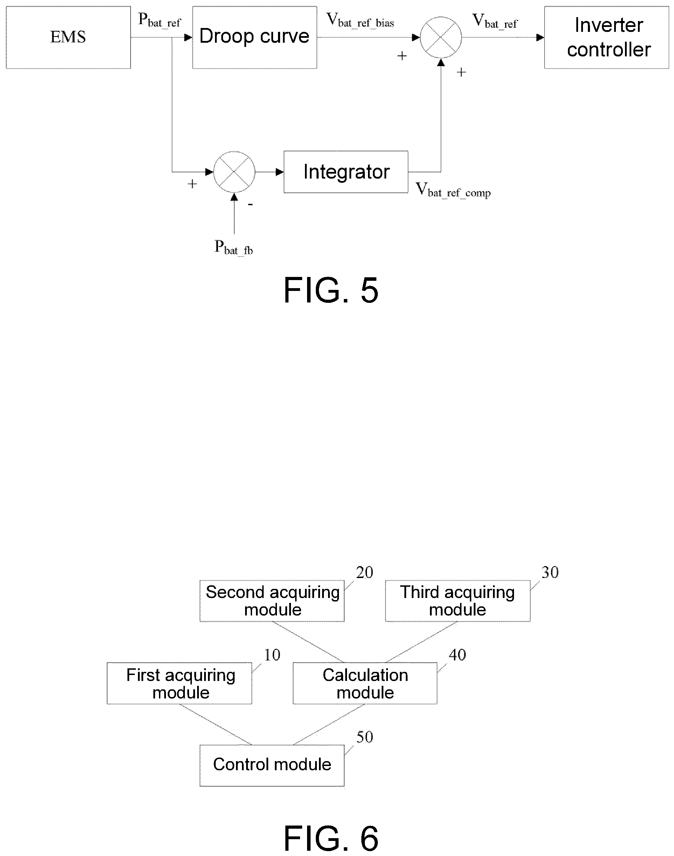

After acquiring the droop curve corresponding to each energy storage unit, each energy storage unit may be controlled separately according to the droop curve corresponding to each energy storage unit. Specifically, as shown in FIG. 5, the EMS in the microgrid inverter 1 gives a power reference value P_{bat_ref}. This power reference value obtains a coarse adjustment of the voltage reference through the droop curve corresponding to a certain energy storage unit, with the output being V_{bat_ref_bias}. The integrator is used to achieve fine adjustment of the voltage reference based on the error between the power reference value and the power detection value P_{bat_fb}, with the output being V_{bat_ref_comp}· Then, after the action of the adder, the final voltage reference value V_{bat_ref} is obtained, i.e., V_{bat_ref}=V_{bat_ref_bias}+V_{bat_ref_comp}. This final voltage reference value is input to the inverter controller to control the energy storage input port voltage of the energy storage unit at the desired value.

According to the control method for parallel energy storage units in a direct-current microgrid in an embodiment of the present disclosure, the droop curve offset of each energy storage unit is calculated based on the energy storage input port voltage collected internally by each energy storage unit and the energy storage connection port voltage of the microgrid inverter. Then, the droop curve used for the direct-current microgrid to perform droop control is adjusted according to the droop curve offset of each energy storage unit to obtain the droop curve corresponding to each energy storage unit in order to control each energy storage unit separately based on the droop curve corresponding to each energy storage unit. Thereby, each parallel energy storage unit is controlled based on a unified control strategy. Moreover, differentiated droop curves are generated according to the voltage error collected by each energy storage unit. Compared with independently designing adaptive droop control algorithms for each energy storage unit and controlling through the same droop curve, the present disclosure may not only solve the problem of uneven current flow when multiple energy storage units are connected in parallel, but also greatly reduce the offset of output power between different energy storage units. Thus, the present disclosure may be applicable to centralized control scenarios with multiple parallel energy storage units, improving the stability and reliability of direct-current microgrid operation.

Corresponding to the above-mentioned control method for parallel energy storage units in a direct-current microgrid in the embodiment, the present disclosure further provides a control apparatus for parallel energy storage units in a direct-current microgrid.

As shown in FIG. 6, the control apparatus for parallel energy storage units in a direct-current microgrid in an embodiment of the present disclosure includes a first acquiring module 10, a second acquiring module 20, a third acquiring module 30, a calculation module 40, and a control module 50. The first acquiring module 10 is configured to obtain the droop curve used by the direct-current microgrid to perform droop control; the second acquiring module 20 is configured to obtain the energy storage connection port voltage of the microgrid inverter; the third acquiring module 30 is configured to obtain the energy storage input port voltage collected internally by each energy storage unit; the calculation module 40 is configured to calculate the droop curve offset of each energy storage unit according to the energy storage input port voltage collected internally by each energy storage unit and the energy storage connection port voltage of the microgrid inverter; the control module 50 is configured to adjust the droop curve used by the direct-current microgrid to perform droop control according to the droop curve offset of each energy storage unit, so as to obtain the corresponding droop curve for each energy storage unit in order to control each energy storage unit separately based on the droop curve corresponding to each energy storage unit.

The droop curve used by the direct-current microgrid to perform droop control is a power-voltage curve, which is a curve representing the relationship between the energy storage input power and the energy storage input port voltage.

In an embodiment of the present disclosure, the droop curve used by the direct-current microgrid to perform droop control includes a discharging area and a charging area. In the discharging area, the energy storage input power is less than 0 (indicating the case where the battery outputs power) and the energy storage input port voltage is less than the rated charge and discharge state switching voltage value of the energy storage unit. In the charging area, the energy storage output power is greater than 0 (indicating the case where power is input to the battery) and the energy storage input port voltage is greater than the rated charge and discharge state switching voltage value of the energy storage unit.

It should be noted that in an embodiment of the present disclosure, the energy storage input port voltage is obtained by internal collection of the energy storage unit, while the energy storage connection port voltage of the microgrid inverter refers to the voltage at the port where the microgrid inverter connects to the energy storage unit, which is also the direct-current bus voltage connecting the energy storage unit, and may be collected by the microgrid inverter.

In a preferred embodiment of the present disclosure, a non-charge and non-discharge area may also be added to the droop curve used by the direct-current microgrid to perform droop control, as shown in FIG. 3, the droop curve used by the direct-current microgrid to perform droop control includes a charging area, a non-charge and non-discharge area, and a discharging area. In the discharging area, the energy storage input power is less than 0, and the energy storage input port voltage is less than the first voltage; in the non-charge and non-discharge area, the energy storage input power equals 0, and the energy storage input port voltage is between the first voltage and the second voltage; in the charging area, the energy storage input power is greater than 0, and the energy storage input port voltage is greater than the second voltage, wherein the first voltage is the rated charge and discharge state switching voltage value of the energy storage unit, and the second voltage is the sum of the rated charge and discharge state switching voltage value of the energy storage unit and a preset voltage width. By adding a non-charge and non-discharge area, it is possible to effectively avoid frequent switching between charge and discharge states when near the rated charge and discharge state switching voltage value of the energy storage unit. It should be understood that the preset voltage width may be set according to the rated charge and discharge state switching voltage value of the energy storage unit and the requirements for suppressing charge and discharge state switching. For example, when the rated charge and discharge state switching voltage value of the energy storage unit is 400V, the preset voltage width may be set to 10V, meaning that the discharging area is where the energy storage input port output voltage is less than 400V, the non-charge and non-discharge area is where the energy storage input port output voltage is between 400V and 410V, and the charging area is where the energy storage input port output voltage is greater than 410V.

The calculation module 40 may first calculate the error of the energy storage input port voltage collected internally by each energy storage unit relative to the energy storage connection port voltage of the microgrid inverter. For example, when the energy storage connection port voltage of the microgrid inverter is 420V, if the energy storage input port voltage collected internally by the energy storage unit A is 417.9V, then the error of the energy storage input port voltage collected internally by the energy storage unit A relative to the energy storage connection port voltage of the microgrid inverter is (417.9-420)/420*100%=-0.5%. If the energy storage input port voltage collected internally by the energy storage unit B is 422.1V, then the error of the energy storage input port voltage collected internally by the energy storage unit B relative to the energy storage connection port voltage of the microgrid inverter is (422.1-420)/420* 100%=0.5%.

Then, the calculation module 40 uses the rated charge and discharge state switching voltage value of the energy storage unit as a reference to calculate the droop curve offset for each energy storage unit according to the error of the energy storage input port voltage collected internally by each energy storage unit relative to the energy storage connection port voltage of the microgrid inverter. Specifically, the droop curve offset for each energy storage unit may be obtained by multiplying the error of the energy storage input port voltage collected internally by each energy storage unit relative to the energy storage connection port voltage at the microgrid inverter by the rated charge and discharge state switching voltage value of the energy storage unit. Still, the aforementioned energy storage units A and B are used as examples, the droop curve offset for the energy storage unit A is -0.5%*400V=-2V, and the droop curve offset for the energy storage unit B is 0.5%*400V=2V.

The control module 50 may specifically translate the droop curve used for the direct-current microgrid to perform droop control along the coordinate axis direction of the energy storage input port voltage according to the droop curve offset of each energy storage unit. If the droop curve offset is negative, the droop curve may be translated along the negative direction of the coordinate axis of the energy storage input port voltage; if the droop curve offset is positive, the droop curve may be translated along the positive direction of the coordinate axis of the energy storage input port voltage. Still, the aforementioned energy storage units A and B are used as examples, as shown in FIG. 4, by translating the droop curve used for the direct-current microgrid to perform droop control 2V to the left, the droop curve corresponding to the energy storage unit A may be obtained; by translating the droop curve used for the direct-current microgrid to perform droop control 2V to the right, the droop curve corresponding to the energy storage unit B may be obtained.

After acquiring the droop curve corresponding to each energy storage unit, the control module 50 may control each energy storage unit separately according to the droop curve corresponding to each energy storage unit. Specifically, as shown in FIG. 5, the EMS in the microgrid inverter 1 gives a power reference value P_{bat_ref}. This power reference value obtains a coarse adjustment of the voltage reference through the droop curve corresponding to a certain energy storage unit, with the output being V_{bat_ref_bias}. The integrator is used to achieve fine adjustment of the voltage reference based on the error between the power reference value and the power detection value P_{bat_fb}, with the output being V_{bat_ref_comp}. Then, after the action of the adder, the final voltage reference value Y_{bat_ref} is obtained, i.e., V_{bat_ref}=V_{bat_ref_bias}+V_{bat_ref_comp}. This final voltage reference value is input to the inverter controller to control the energy storage input port voltage of the energy storage unit at the desired value.

According to the control apparatus for parallel energy storage units in a direct-current microgrid in an embodiment of the present disclosure, by calculating the droop curve offset of each energy storage unit based on the energy storage input port voltage collected internally by each energy storage unit and the energy storage connection port voltage of the microgrid inverter, and then adjusting the droop curve used for the direct-current microgrid to perform droop control according to the droop curve offset of each energy storage unit to obtain the droop curve corresponding to each energy storage unit, so as to control each energy storage unit separately according to the droop curve corresponding to each energy storage unit, it is possible to control each parallel energy storage unit based on a unified control strategy, and to generate differentiated droop curves according to the voltage error collected by each energy storage unit. Compared with independently designing adaptive droop control algorithms for each energy storage unit and controlling through the same droop curve, the present disclosure may not only solve the problem of uneven current flow when multiple energy storage units are connected in parallel, but also greatly reduce the offset of output power of different energy storage units. Thus, the present disclosure may be applicable to centralized control scenarios of multiple parallel energy storage units, improving the stability and reliability of direct-current microgrid operation.

In the description of the present disclosure, the terms "first" and "second" are used for descriptive purposes only and may not be understood as indicating or implying relative importance or implicitly specifying the number of technical features indicated. Thus, features defined as "first" and "second" may explicitly or implicitly include one or more of these features. The meaning of "multiple" is two or more, unless otherwise explicitly and specifically limited.

In the present disclosure, unless otherwise explicitly specified and limited, terms such as "configure", "connect", "connection", "fix" and other terms should be understood in a broad sense. For example, it may be a fixed connection, or it may be a detachable connection, or an integral; it may be a mechanical connection, or it may be an electrical connection; it may be directly connected, or it may be indirectly connected through an intermediate medium, it may be the internal communication of two elements or the interaction relationship between two elements. For those skilled in the art, the specific meaning of the above terms in the present disclosure may be understood according to specific situations.

In the present disclosure, unless otherwise explicitly specified and limited, a first feature "on" or "under" a second feature may mean that the first and second features are in direct contact, or the first and second features are in indirect contact through an intermediate medium. Moreover, the first feature "above", "over" and "on top of" the second feature may mean that the first feature is directly above or diagonally above the second feature, or merely indicate that the horizontal height of the first feature is higher than that of the second feature. The first feature "below", "under" and "underneath" the second feature may mean that the first feature is directly below or diagonally below the second feature, or merely indicate that the horizontal height of the first feature is less than that of the second feature.

In the description of this specification, references to "an embodiment", "some embodiments", "example", "specific example", or "some examples" indicate that the specific features, structures, materials, or characteristics described in connection with the embodiment or example are included in at least one embodiment or example of the present disclosure. In this specification, the illustrative representations of the above terms are not necessarily for the same embodiment or example. Moreover, the described specific features, structures, materials, or characteristics may be combined in any suitable manner in one or more embodiments or examples. Furthermore, in circumstances without mutual contradiction, those skilled in the art may combine and integrate different embodiments or examples and features of different embodiments or examples described in this specification.

Any process or method description in the flow charts or otherwise described herein may be understood as representing a module, segment, or portion of code that includes one or more executable instructions for implementing specific logical functions or steps in the process, and the preferred embodiments of the present disclosure include other embodiments in which functions may be executed not in the order shown or discussed, including in a substantially simultaneous manner or in a reverse order, depending on the functionality involved, as may be understood by those skilled in the art to which the embodiments of the present disclosure pertain.

The logic and/or steps represented in the flow charts or otherwise described herein, for example, may be considered as an ordered list of executable instructions for implementing logical functions, which may be specifically implemented in any computer-readable medium for use by or in connection with an instruction execution system, apparatus, or device (such as a computer-based system, a system including a processor, or other system that can fetch instructions from an instruction execution system, apparatus, or device and execute the instructions). For the purposes of this specification, a "computer-readable medium" may be any device that can contain, store, communicate, propagate, or transport the program for use by or in connection with the instruction execution system, apparatus, or device. More specific examples of the computer-readable medium (non-exhaustive list) include the following: an electrical connection portion (electronic device) having one or more wires, a portable computer diskette (magnetic device), random access memory (RAM), read-only memory (ROM), erasable programmable read-only memory (EPROM or flash memory), an optical fiber device, and a portable compact disc read-only memory (CDROM). In addition, the computer-readable medium may even be paper or another suitable medium on which the program is printed, as the program can be electronically captured, for example, by optically scanning the paper or other medium, then compiling, interpreting, or otherwise processing it in a suitable manner if necessary, and then storing it in a computer memory.

It should be understood that various parts of the present disclosure may be implemented by hardware, software, firmware, or a combination thereof. In the above implementations, multiple steps or methods may be implemented by software or firmware stored in memory and executed by an appropriate instruction execution system. For example, if implemented in hardware, as in another implementation, it may be implemented using any of the following techniques known in the art or a combination thereof: discrete logic circuits with logic gates for implementing logic functions on data signals, application specific integrated circuits with appropriate combination logic gates, programmable gate arrays (PGAs), field programmable gate arrays (FPGAs), etc.

An ordinary skilled person in this technical field may understand that all or part of the steps carried out in the above-described implementation methods may be instructed by a program to complete the relevant hardware, and the program may be stored in a computer-readable storage medium. The program, when executed, includes one or a combination of the steps of the method implementations.

Moreover, in the various implementations of the present disclosure, the functional units may be integrated into one processing module, or may exist physically as separate units, or two or more units may be integrated into one module. The integrated modules mentioned above may be implemented in the form of hardware or in the form of software functional modules. If the integrated module is implemented in the form of a software functional module and sold or used as an independent product, it may also be stored in a computer-readable storage medium.

Although the implementations of the present disclosure have been shown and described above, it may be understood that the above implementations are exemplary and should not be construed as limitations on the present disclosure. Ordinary skilled persons in the field may make changes, modifications, substitutions, and variations to the above implementations within the scope of the present disclosure.

## Claims

1. A control method for parallel energy storage units in a direct-current microgrid, **characterized in that** the direct-current microgrid comprises a microgrid inverter and a plurality of energy storage units connected in parallel to a direct-current side of the microgrid inverter, the control method comprising the following steps:
acquiring a droop curve used by a direct-current microgrid to perform droop control;
acquiring an energy storage connection port voltage of a microgrid inverter;
acquiring an energy storage input port voltage collected in each energy storage unit;
calculating a droop curve offset of each energy storage unit according to the energy storage input port voltage collected in each energy storage unit and the energy storage connection port voltage of the microgrid inverter; and
adjusting the droop curve used by the direct-current microgrid to perform droop control according to the droop curve offset of each energy storage unit, so as to obtain a droop curve corresponding to each energy storage unit, and respectively controlling each energy storage unit according to the droop curve corresponding to each energy storage unit.

2. The control method for the parallel energy storage units in the direct-current microgrid according to claim 1, **characterized in that** the droop curve used by the direct-current microgrid to perform droop control comprises a charging area, a non-charge and non-discharge area, and a discharging area, wherein in the discharging area, an energy storage input power is less than 0, and the energy storage input port voltage is less than a first voltage; in the non-charge and non-discharge area, the energy storage input power is equal to 0, and the energy storage input port voltage is between the first voltage and a second voltage; in the charging area, the energy storage input power is greater than 0, and the energy storage input port voltage is greater than the second voltage,
wherein the first voltage is a rated charge and discharge state switching voltage value of the energy storage unit, and the second voltage is a sum of the rated charge and discharge state switching voltage value of the energy storage unit and a preset voltage width.

3. The control method for the parallel energy storage units in the direct-current microgrid according to claim 1 or 2, **characterized in that** calculating the droop curve offset of each energy storage unit according to the energy storage input port voltage collected in each energy storage unit and the energy storage connection port voltage of the microgrid inverter specifically comprises:
calculating an error of the energy storage input port voltage collected internally by each of the energy storage units relative to the energy storage connection port voltage of the microgrid inverter;
using the rated charge and discharge state switching voltage value of the energy storage unit as a reference to calculate the droop curve offset for each of the energy storage units according to the error of the energy storage input port voltage collected internally by each of the energy storage units relative to the energy storage connection port voltage of the microgrid inverter.

4. The control method for the parallel energy storage units in the direct-current microgrid according to claim 3, **characterized in that** adjusting the droop curve used by the direct-current microgrid to perform droop control according to the droop curve offset of each energy storage unit specifically comprises:
translating the droop curve used by the direct-current microgrid to perform droop control along a coordinate axis direction of the energy storage input port voltage according to the droop curve offset of each of the energy storage units.

5. A control apparatus for parallel energy storage units in a direct-current microgrid, **characterized in that** the direct-current microgrid comprises a microgrid inverter and a plurality of energy storage units connected in parallel to a direct-current side of the microgrid inverter, the control apparatus comprising:
a first acquiring module, wherein the first acquiring module is configured to obtain a droop curve used by the direct-current microgrid to perform droop control;
a second acquiring module, wherein the second acquiring module is configured to obtain an energy storage connection port voltage of the microgrid inverter;
a third acquiring module, wherein the third acquiring module is configured to obtain an energy storage input port voltage collected internally by each of the energy storage units;
a calculation module, wherein the calculation module is configured to calculate a droop curve offset for each of the energy storage units according to the energy storage input port voltage collected internally by each of the energy storage units and the energy storage connection port voltage of the microgrid inverter;
a control module, wherein the control module is configured to adjust the droop curve used by the direct-current microgrid to perform droop control according to the droop curve offset of each of the energy storage units, so as to obtain a droop curve corresponding to each of the energy storage units in order to control each of the energy storage units separately according to the droop curve corresponding to each of the energy storage units.

6. The control apparatus for the parallel energy storage units in the direct-current microgrid according to claim 5, **characterized in that** the droop curve used by the direct-current microgrid to perform droop control comprises a charging area, a non-charge and non-discharge area, and a discharging area, wherein in the discharging area, an energy storage input power is less than 0, and the energy storage input port voltage is less than a first voltage; in the non-charge and non-discharge area, the energy storage input power is equal to 0, and the energy storage input port voltage is between the first voltage and a second voltage; in the charging area, the energy storage input power is greater than 0, and the energy storage input port voltage is greater than the second voltage,
wherein the first voltage is a rated charge and discharge state switching voltage value of the energy storage unit, and the second voltage is a sum of the rated charge and discharge state switching voltage value of the energy storage unit and a preset voltage width.

7. The control apparatus for the parallel energy storage units in the direct-current microgrid according to claim 5 or 6, **characterized in that** the calculation module is specifically configured to:
calculate an error of the energy storage input port voltage collected internally by each of the energy storage units relative to the energy storage connection port voltage of the microgrid inverter;
use the rated charge and discharge state switching voltage value of the energy storage unit as a reference to calculate the droop curve offset of each of the energy storage units according to the error of the energy storage input port voltage collected internally by each of the energy storage units relative to the energy storage connection port voltage of the microgrid inverter.

8. The control apparatus for the parallel energy storage units in the direct-current microgrid according to claim 7, **characterized in that** the control module is specifically configured to translate the droop curve used by the direct-current microgrid to perform droop control along a coordinate axis direction of the energy storage input port voltage according to the droop curve offset of each of the energy storage units.
